# EUROPÄISCHE PATENTSCHRIFT

(11) **EP 0 758 805 B1**
(45) Veröffentlichungstag und Bekanntmachung des Hinweises auf die Patenterteilung: **13.01.1999**
(21) Anmeldenummer: 96109734.2
(22) Anmeldetag: 18.06.1996
(51) Int. Cl.: H01R 9/24, H02B 1/16

(54) **Potentialausgleichsschiene**
Neutral bar connector
Barrette de continuité de masse

(30) Priorität: 11.08.1995 DE 29512907 U
(43) Veröffentlichungstag der Anmeldung: 19.02.1997
(73) Patentinhaber: Hermann Kleinhuis GmbH. & Co. KG, D-58507 Lüdenscheid (DE)
(72) Erfinder: Kinikarslan,Turgut, 58452 Witten (DE); Kropp,Christian, 58511 Lüdenscheid (DE); Marquart,Ralf, 58507 Lüdenscheid (DE)
(74) Vertreter: Buse, Karl Georg, Dipl.-Phys.

(56) Entgegenhaltungen:
- DE-A- 3 016 625
- DE-B- 1 186 123
- DE-U- 7 911 792
- US-A- 3 961 227

## Beschreibung

Die Erfindung betrifft eine Potentialausgleichsschiene mit einer eine Vielzahl von Anschlußstellen für Ausgleichsleiter und wenigstens eine Klemmstelle für ein Erdungsband und eine Klemmstelle für einen Blitzschutzleiter aufweisenden stromleitenden Schiene, mit einem die Schiene halternden Sockelteil, das an einem Träger wie einer Wand od. dgl. mittels wenigstens zwei Halteelemente aufweisenden Fußteilen festlegbar ist, sowie mit einem die Schiene bereichsweise übergreifenden Deckelteil, dessen im Bereich der Fußteile angeordnete Wandteile mit dem Sockelteil lösbar verbindbar sind.

Bei einer Potentialausgleichsschiene der eingangs genannten Art (DE 79 11 792-U) sind die Anschlußstellen für Ausgleichsleiter durch Bohrungen in der stromleitenden Schiene gebildet, die in einer in Längsrichtung der Schiene verlaufenden Reihe hintereinander angeordnet sind, wobei sich die Längsachse jeder einzelnen Bohrung parallel zur Bodenwandung des Sockelteiles jedoch quer zur Längsrichtung dieses Sockelteiles erstreckt. Die in diese Bohrungen einführbaren Ausgleichsleiter werden durch senkrecht zu diesen Bohrungen angeordnete Halteschrauben in den Bohrungen festgeklemmt. Sowohl die Bohrungen als auch die sich senkrecht dazu erstreckenden Gewindelöcher zur Aufnahme der Halteschrauben schwächen an den betreffenden Stellen den Querschnitt der stromleitenden Schiene, für die jedoch ein Mindestquerschnitt an verbleibendem Werkstoff vorgeschrieben ist. Daher ist die stromleitende Schiene in ihrem Querschnitt im Hinblick auf die wandgeschwächten Anschlußstellen auszulegen, so daß eine nicht erforderliche Werkstoffanhäufung insbesondere an den Stellen in Kauf zu nehmen ist, wo Erdungsband und Blitzschutzleiter angeschlossen werden. Außerdem sind der Blitzschutzleiter und das Erdungsband an zwei voneinander getrennten Stellen an die Schiene anschließbar, wodurch der Werkstoffaufwand für die stromleitende Schiene noch erhöht wird.

Aufgabe der Erfindung ist es eine Potentialausgleichsschiene der eingangs genannten Art dahingehend zu verbessern, daß der Werkstoffeinsatz für die stromleitende Schiene verringert und eine kompaktere Bauform erzielt werden kann. Diese Aufgabe ist erfindungsgemäß dadurch gelöst, daß die Schiene von mehreren in Schienenlängsrichtung nebeneinander angeordneten, die Anschlußstellen für Ausgleichsleiter bildenden Klemmbügeln übergriffen ist, die mittels Klemmschrauben mit der Schiene verbindbar sind, und daß die Schiene außerdem eine kombinierte Klemmstelle für das Erdungsband und den Blitzschutzleiter aufweist. Dadurch läßt sich einerseits der Gesamtquerschnitt der stromleitenden Schiene minimieren und andererseits deren Länge verkürzen, so daß sich ein wesentlich reduzierten Materialeinsatz für die stromleitende Schiene ergibt.

Zur Vereinfachung der Fertigung wird nach einem weiteren Ausgestaltungsmerkmal der Erfindung vorgeschlagen unter der am Sockelteil aufliegenden Schiene im Sockelteil Aufnahmetaschen zur drehfesten Halterung von Schraubenmuttern anzuordnen, in welche die Klemmschrauben eindrehbar sind. Dabei braucht in der relativ dünnwandigen, stromleitenden Schiene nur ein Durchgangsloch vorgesehen zu werden, durch welches die Klemmschrauben hindurch in die in den Aufnahmetaschen undrehbar angeordneten Schraubenmuttern einschraubbar sind.

Um während des Herstellens der stromleitenden Verbindung zwischen den Ausgleichsleitern und der Schiene infolge des durch die Klemmschrauben bewirkten Niederdrückens der Klemmbügel diese Klemmbügel dabei an der Schiene definiert führen zu können, sind die Klemmbügel haubenartig geformt und weisen an ihren Eckbereichen Führungsfinger zum seitlichen Übergreifen der stromleitenden Schiene auf. Dabei läßt sich die Öffnungslage der Klemmbügel vorteilhaft dadurch sichern, daß die Führungsfinger an ihren freien Enden die Offenstellung dieser Klemmbügel gewährleistende, das Einführen der Potentialausgleichsleiter begünstigende, zur Schiene gerichtete und daran anliegende Klemmwulste aufweisen.

Eine sichere und plazierte Festlegung des Blitzschutzleiters an der stromleitenden Schiene läßt sich erzielen, indem die Schiene im Bereich der kombinierten Klemmstelle eine in den Sockelteil vorragende Delle aufweist, zu deren beiden Seiten von Aufnahmetaschen im Sockelteil drehfest aufgenommene Schraubenmuttern angeordnet sind, in welche Klemmschrauben zur Halterung einer Andruckplatte mit einer nach außen aufgewölbten Delle eindrehbar sind, wobei der Abstand zwischen den Klemmschrauben und die Länge der Andruckplatte zur Aufnahme des Erdungsbandes bemessen sind. Dadurch läßt sich an dieser kombinierten Klemmstelle sowohl das Erdungsband als auch der Blitzschutzleiter festklemmen.

Eine unverlierbare Zuordnung des Deckelteiles zum Sockelteil einerseits und eine sichere Halterung dieses Deckelteiles am Sockelteil läßt sich vorteilhaft dadurch erzielen, daß der Deckelteil an einer Stirnseite eine Schwenkachse aufweist, die in eine Lagerschale am Sockelteil eingeclipst ist, während die andere Stirnseite des Deckelteiles eine vorspringende Rastnase aufweist, die in Anklapplage des Deckelteiles am Sockelteil an diesem verrastet. Dabei ist die Lagerschale vorzugsweise oberseitig offen gestaltet und umfaßt die Achse mehr als halbkreisförmig, während am Grund der Lagerschale eine Spreiznut angeordnet ist, wodurch das Einclipsen der Schwenkachse des Deckelteiles in die Lagerschale erleichtert wird.

Die Erfindung ist in einem Ausführungsbeispiel auf der Zeichnung dargestellt und wird nachfolgend näher erläutert. Es zeigen:
- Fig. 1: die erfindungsgemäße Potentialausgleichsschiene mit aufgesetztem Deckelteil in einem Längsschnitt,
- Fig. 2: die aus Fig. 1 ersichtliche Potentialausgleichsschiene in einer Draufsicht, wobei jedoch der Deckelteil, die Andruckplatte für Blitzschutzleiter und Erdungsband sowie drei von vier Klemmbügeln abgenommen sind, während die abgenommenen Klemmbügel strichpunktiert dargestellt sind,

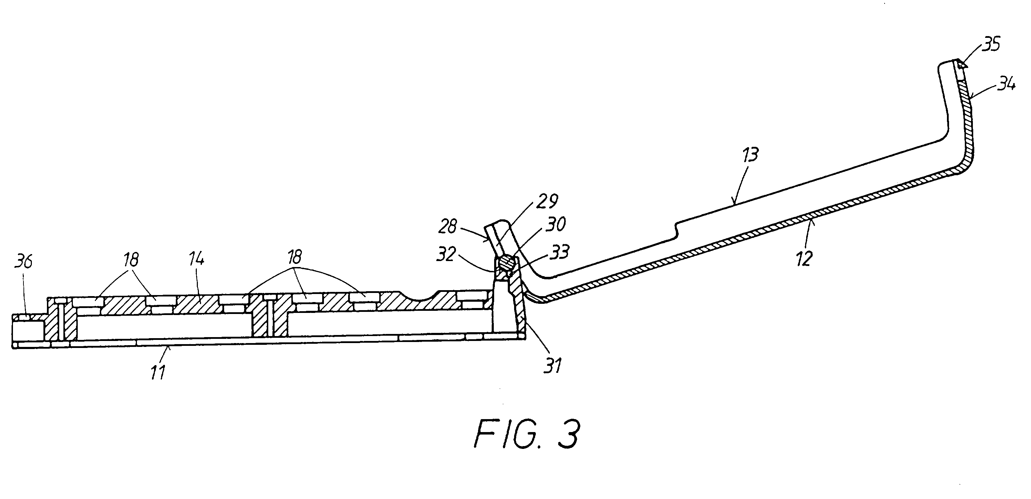

- Fig. 3: den Sockelteil der Potentialausgleichsschiene mit daran angeclipstem Deckelteil in einer aufgeklappten Lage,
- Fig. 4: die Potentialausgleichsschiene in einem Querschnitt nach der Linie IV - IV von Fig. 1.

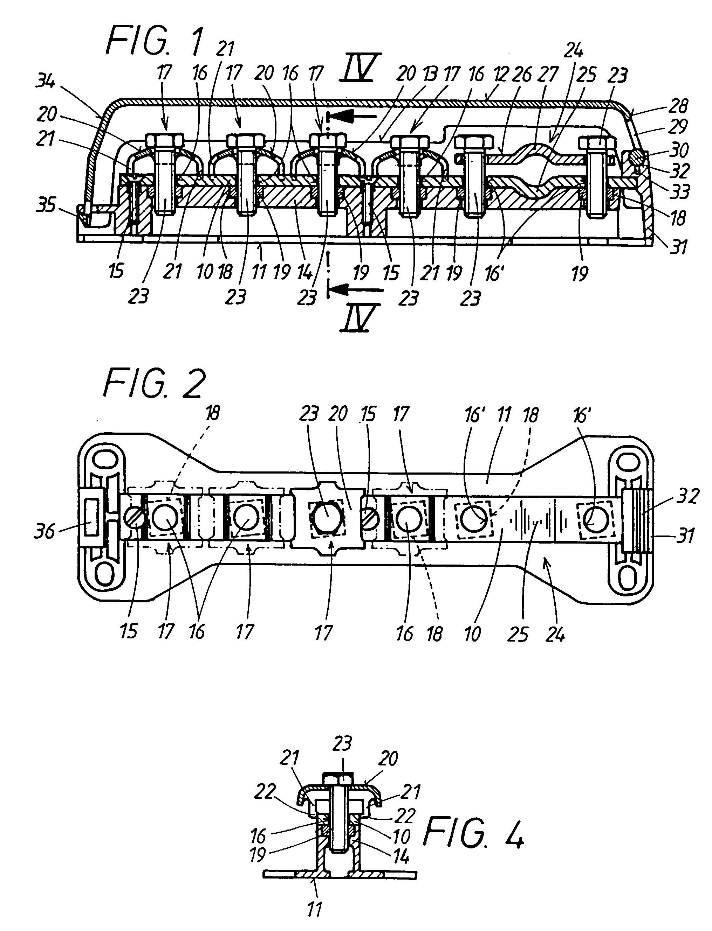

Die Potentialausgleichsschiene besteht im wesentlichen aus einer stromleitfähigen Schiene 10, einem diese halternden Sockelteil 11 und einem die Schiene 10 und den Sockelteil 11 übergreifenden Deckelteil 12. Der Sockelteil 11 und der Deckelteil 12 sind vorzugsweise aus einem thermoplastischen, nicht leitenden Kunststoff hergestellt. Wie der Fig. 1 entnommen werden kann, ist der Deckelteil 12 mit einer Aussparung 13 versehen, so daß sowohl die einzelnen, nicht dargestellten Potentialausgleichsleiter als auch das Erdungsband und gegebenenfalls auch der Blitzschutzleiter ungehindert zur Schiene 10 gelangen können.

Die Schiene 10 weist einen rechteckigen Querschnitt auf und ist als Flachstück auf eine Brückenwand 14 des Sockelteiles 11 aufgelegt und mittels Befestigungsschrauben 15 fest mit dem Sockelteil 11 verbunden. In Längsrichtung der Schiene 10 befinden sich mehrere abstandsweise zueinander angeordnete Durchgangsbohrungen 16, durch welche Anschlußstellen 17 für die Potentialausgleichsleiter definiert sind. Bei dem dargestellten Ausführungsbeispiel befinden sich vier Anschlußstellen 17 in gleichem Abstand zueinander an der Schiene 10, an deren einer Seite weitere zwei Durchgangsbohrungen 16' vorhanden sind, die in etwas größerem Abstand zueinander angeordnet sind, um zwischen sich ein nicht dargestelltes Erdungsband aufnehmen zu können.

Unterhalb der Durchgangsbohrungen 16 bzw. 16' befinden sich in der Brückenwand 14 des Sockelteiles 11 Aufnahmetaschen 18, in welchen jeweils eine Schraubenmutter 19 durch Formschluß drehfest angeordnet ist. Die Schiene 10 ist über ihren Klemmstellen 17 von haubenartigen Klemmbügeln 20 übergriffen, die zur seitlichen Einführung von Potentialausgleichsleitern freigeschnitten sind und in ihren Eckbereichen Führungsfinger 21 aufweisen. Diese Führungsfinger sind derartig angeordnet, daß sie seitlich an der Schiene 10 vorbeigreifen können, wobei an den freien Enden der Führungsfinger zur Schiene 10 gerichtete und daran anliegende Klemmwulste 22 angeformt sind. Durch entsprechende Bemessung dieser Klemmwulste wird gewährleistet, daß die Klemmbügel 20 in der aus Fig. 1 ersichtlichen Offenstellung verbleiben und nur durch Anziehen der durch die Klemmbügel 20 und die Schiene 10 hindurchgeführten und in die Schraubenmutter 19 eingedrehten Klemmschrauben 23 an der Schiene 10 und der diese tragenden Brückenwand 14 vorbeigedrückt werden können, um die Potentialausgleichsleiter an der Schiene 10 zur Kontaktierung festklemmen zu können. An einem Endbereich der Schiene 10 befindet sich eine weitere, kombinierte Klemmstelle 24, mit deren Hilfe sowohl ein Erdungsband als auch ein Blitzschutzleiter mit der Schiene 10 kontaktiert werden können. In der Mitte zwischen den Durchgangsbohrungen 16' ist die Schiene 10 zur Aufnahme des Blitzschutzleiters mit einer in den Sockelteil 11 vorragenden Delle 25 versehen. Unterhalb der beiderseits der Delle vorhandenen Durchgangsbohrungen 16' befinden sich in der Rückenwand 14 des Sockelteiles 11 ebenfalls Aufnahmetaschen 18, die ebenfalls Schraubenmuttern 19 drehfest haltern. Diese Schraubenmuttern 19 dienen ebenfalls der Aufnahme von Klemmschrauben 23, mit welchen eine zur kombinierten Klemmstelle 24 gehörende Andruckplatte 26 gegen die Schiene 8 geschraubt werden kann, so daß ein sich zwischen Schiene 10 und Andruckplatte 26 befindendes Erdungsband und/oder ein Blitzschutzleiter an der Schiene 10 zur Kontaktierung festgeklemmt werden können. Auch die Andruckplatte 26 weist der Delle 25 in der Schiene 10 gegenüberliegend eine nach außen gewölbte Delle 27 auf.

Der zu der Potentialausgleichsschiene gehörende Deckelteil 12 weist an einer Stirnseite 28 eine Aussparung 29 auf, die von einer Schwenkachse 30 des Deckelteiles 12 durchquert wird. An der entsprechenden Stirnseite des Sockelteiles 11 ragt ein Lagerbock 31 über die Brückenwand 14 nach oben vor und weist oberseitig eine nach oben offene Lagerschale 32 auf, die am Grund mit einer Spreiznut 33 versehen ist, um die Schwenkachse 30 in die Lagerschale 32 einclipsen zu können. Dabei ist die Lagerschale 32 derart gestaltet, daß sie die Schwenkachse 30 etwas mehr als halbkreisförmig umfassen kann. Die der Stirnseite 28 gegenüberliegende Stirnseite 34 des Deckelteiles 12 weist eine vorspringende Rastnase 35 auf, die in Anklapplage des Deckelteiles 12 eine Wandausnehmung 36 im Sockelteil 11 durchdringt und hinter dieser Wandausnehmung 36 verrastet.

Wie bereits erwähnt, gibt die dargestellte und vorbeschriebene Ausführungsform den Erfindungsgegenstand nur beispielsweise wieder, der keinesfalls allein darauf beschränkt ist. Es sind vielmehr noch mancherlei Änderungen und andere Ausgestaltungen denkbar. Darüber hinaus sind alle aus der Beschreibung und den Zeichnungen ersichtlichen Merkmale erfindungswesentlich auch wenn sie in den Ansprüchen nicht ausdrücklich beansprucht sind.

## Patentansprüche

1. Potentialausgleichsschiene mit einer eine Vielzahl von Anschlußstellen (17) für Ausgleichsleiter und wenigstens eine Klemmstelle für ein Erdungsband und eine Klemmstelle für einen Blitzschutzleiter aufweisenden stromleitenden Schiene (10), mit einem die Schiene halternden Sockelteil (11), das an einem Träger wie einer Wand od. dgl. mittels wenigstens zwei Halteelemente aufweisenden Fußteilen festlegbar ist, sowie mit einem die Schiene bereichsweise übergreifenden Deckelteil (12), dessen im Bereich der Fußteile angeordnete Wandteile mit dem Sockelteil lösbar verbindbar sind,
**dadurch gekennzeichnet,**
daß die Schiene (10) von mehreren in Schienenlängsrichtung nebeneinander angeordneten, die Anschlußstellen (17) für Ausgleichsleiter bildenden Klemmbügeln (20) übergriffen ist, die mittels Klemmschrauben (23) mit der Schiene (10) verbindbar sind, und daß die Schiene (10) außerdem eine kombinierte Klemmstelle (24) für das Erdungsband und den Blitzschutzleiter aufweist.

2. Potentialausgleichsschiene nach Anspruch 1, dadurch gekennzeichnet, daß unter der am Sockelteil (11) aufliegenden Schiene (10) im Sockelteil Aufnahmetaschen (18) zur drehfesten Halterung von Schraubenmuttern (19) angeordnet sind, in welche die Klemmschrauben (23) eindrehbar sind.

3. Potentialausgleichsschiene nach Anspruch 1 oder 2, dadurch gekennzeichnet, daß die Klemmbügel (20) haubenartig geformt sind und an ihren Eckbereichen Führungsfinger (21) zum seitlichen Übergreifen der stromleitenden Schiene (10) aufweisen.

4. Potentialausgleichsschiene nach Anspruch 3, dadurch gekennzeichnet, daß die Führungsfinger (21) an ihren freien Enden die Offenstellung der Klemmbügel (20) gewährleistende zur Schiene (10) gerichtete und daran anliegende Klemmwulste (22) aufweisen.

5. Potentialausgleichsschiene nach einem der vorhergehenden Ansprüche, dadurch gekennzeichnet, daß die Schiene (10) im Bereich der kombinierten Klemmstelle (24) eine in den Sockelteil (11) vorragende Delle (25) aufweist, zu deren beiden Seiten von Aufnahmetaschen (18) im Sockelteil (11) drehfest aufgenommene Schraubenmuttern (19) angeordnet sind, in welche Klemmschrauben (23) zur Halterung einer Andruckplatte (26) mit einer nach außen aufgewölbten Delle (27) eindrehbar sind, wobei der Abstand zwischen den Klemmschrauben (23) und die Länge der Andruckplatte (26) zur Aufnahme des Erdungsbandes bemessen sind.

6. Potentialausgleichsschiene nach einem der vorhergehenden Ansprüche, dadurch gekennzeichnet, daß der Deckelteil (12) an einer Stirnseite (28) eine Schwenkachse (30) aufweist, die in einer Lagerschale (32) am Sockelteil (11) angeclipst ist, während die andere Stirnseite (34) des Deckelteiles (12) eine vorspringende Rastnase (35) aufweist, die in Anklapplage des Deckelteiles (12) am Sockelteil (11) an diesem verrastet.

7. Potentialausgleichsschiene nach Anspruch 6, dadurch gekennzeichnet, daß die Lagerschale (32) oberseitig offen ist und mehr als halbkreisförmig die Achse (30) umfaßt und am Grund der Lagerschale (32) eine Spreiznut (33) angeordnet ist.

## Claims

1. A neutral bar connector with a conductive bar (10) exhibiting a plurality of connection points (17) for neutral conductors and at least one terminal for an earthing strip and one terminal for a lightning conductor, with a base part (11) holding the bar, said base part being attachable to a carrier such as a wall or similar by means of at least two foot parts exhibiting holding elements, as well as with a lid part (12) which overlaps sections of the bar and whose wall parts arranged in the area of the foot parts are detachably connected to the base part,
characterised in that
the bar (10) is overlapped by several clamping brackets (20) arranged beside each other in the longitudinal direction of the bar and forming the connection points (17) for neutral bars, said brackets being connectable with clamping screws (23) to the bar (10), and that the bar (10) also has a combined terminal (24) for the earthing strip and the lightning conductor.

2. The neutral bar connector according to claim 1, characterised in that receiving pockets (18) are arranged under the bar (10) resting on the base part (11) for the secure fixing of screw nuts (19), the clamping screws (23) being screwed into said pockets.

3. The neutral bar connector according to claim 1 or 2, characterised in that the clamping brackets (20) are hood-shaped and exhibit, at their corner sections, guide fingers (21) for the lateral overlapping of the conductive bar (10).

4. The neutral bar connector according to claim 3, characterised in that the guide fingers (21) have, at their free ends, clamping beads (22) which ensure the open position of the clamping brackets (20), face towards the bar (10) and rest thereon.

5. The neutral bar connector according to any one of the above claims, characterised in that the bar (10), in the area of the combined terminal (24), exhibits an indentation (25) protruding into the base part (11), on both sides of which indentation screw nuts (19) are arranged which are securely accommodated by receiving pockets (18) in the base (11), into which nuts clamping screws (23) to hold a pressure plate (26) having an indentation (27) curved outwards can be screwed, whereby the distance between the clamping screws (23) and the length of the pressure plate (26) are dimensioned to accommodate the earthing strip.

6. The neutral bar connector according to any one of the above claims, characterised in that the lid part (12) has, on one end face (28), a swivel axle (30) which is clipped in a bearing shell (32) onto the base part (11) whereas the other end face (34) of the lid part (12) exhibits a protruding catch (35) which engages with the base part (11) when the lid part (12) is clipped onto said base part.

7. The neutral bar connector according to claim 6, characterised in that the bearing shell (32) is open on its upper side and encloses the axle (30) by more than a semi-circle and an expanding groove (33) is arranged on the bottom of the bearing shell (32).

## Revendications

1. Barrette de continuité de masse comportant une multitude de bornes de raccordement (17) pour conducteurs assurant cette continuité, et avec au moins un rail (10) électroconducteur comportant au moins une borne où brider un ruban de mise à la terre et une borne où brider un conducteur parafoudre, avec un socle (11) servant de support au rail, fixable (11) contre le mur ou assimilé au moyen de pieds présentant au moins deux éléments de retenue, ainsi que comportant une pièce couvercle (12) recouvrant localement le rail, dont (12) les parois sont, dans la zone des pieds, reliables de manière détachable avec le socle,
**caractérisée en ce que**
le rail (10) est recouvert de plusieurs étriers-brides (20) juxtaposés dans le sens longitudinal du rail et formant les bornes (17) où se raccordent les conducteurs assurant la continuité, ces étriers-brides (20) étant reliables au rail (10) par des vis de bridage (23), et en ce que le rail (10) présente en outre une borne combinée (24) où se brident le ruban de mise à la terre et le conducteur parafoudre.

2. Barrette de continuité de masse selon la revendication 1, caractérisée en ce que sous le rail (10) en applique contre le socle (11), des poches-logements (18) ont été disposées dans le socle pour retenir, en les empêchant de tourner, des écrous (19) dans lesquels des vis de bridage (23) peuvent venir se visser.

3. Barrette de continuité de masse selon la revendication 1 ou 2, caractérisée en ce que les étriers de bridage (20) ont la forme de capots et que leurs angles présentent des doigts-guides (21) permettant de franchir le rail électroconducteur (10) par le côté.

4. Barrette de continuité de masse selon la revendication 3, caractérisée en ce que les doigts-guides (21) présentent, en leurs extrémités libres, des bourrelets de bridage (22) garantissant le maintien des étriers de bridage (20) en position ouverte, tournés (22) vers le rail (10) et appliquant (22) contre ce dernier.

5. Barrette de continuité de masse selon l'une des revendications précédentes, caractérisée en ce que le rail (10) présente, dans la zone de la borne combinée (24), une bosselure (25) faisant saillie dans le socle (11), sur les deux côtés de laquelle sont disposés des écrous à vis (19) dans des poches-logements (18) servant à retenir ces écrous (19) en les empêchant de tourner et dans lesquels (19) peuvent se visser des vis de bridage (23) pour retenir une plaque d'appui (26) présentant une bosselure (27) incurvée vers l'extérieur, l'écart entre les vis de bridage (23) et la longueur de la plaque d'appui (26) servant à recevoir le ruban de mise à la terre étant mesurés.

6. Barrette de continuité de masse selon l'une des revendications précédentes caractérisée en ce que le couvercle (12) présente, sur un côté frontal (28), un axe de pivotcment (30) clipsé dans une coquille-palier (32) contre le socle (11), tandis que l'autre côté frontal (34) du couvercle (12) présente un cran en saillie (35) qui, couvcrclc (12) en position rabattue sur le socle (11), vient encranter contre ce dernier.

7. Barrette de continuité de masse selon la revendication 6, caractérisée en ce que le côté supérieur de la coquille-palier (32) est ouvert et qu'il entoure l'axe (30) sur plus d'un demi-cercle et en ce qu'au fond de la coquille-palier (32) est disposée une rainure d'expansion (33).
